# FASCICULE DE BREVET EUROPEEN

(11) **EP 2 019 584 B1**
(45) Date de publication et mention de la délivrance du brevet: **02.12.2009**
(21) Numéro de dépôt: 07731396.3
(22) Date de dépôt: 02.05.2007
(51) Int. Cl.: A01N 25/18

(54) **PRODUIT COMPOSITE APTE A DIFFUSER UN AGENT ACTIF**
VERBUNDPRODUKT FÜR DIE DIFFUNDIERUNG EINES WIRKSTOFFS
COMPOSITE PRODUCT FOR DIFFUSING AN ACTIVE AGENT

(30) Priorité: 03.05.2006 FR 0603953
(43) Date de publication de la demande: 04.02.2009
(73) Titulaire: Spado S.A., 06270 Villeneuve Loubet (FR)
(72) Inventeur: LE PERCHEC, Pierre, 69003 Lyon (FR); CARANTE, Jean-Pierre, 69100 Villeurbanne (FR); POUYET, Bernard, 69300 Caluire (FR)
(74) Mandataire: Schmidt, Martin Peter
(86) Numéro de dépôt international: PCT/FR2007/000747
(87) Numéro de publication internationale: WO 2007/125219

(56) Documents cités:
- EP-A- 1 190 725

## Description

### Domaine technique de l'invention

La présente invention concerne les produits et dispositifs aptes à diffuser un agent actif. Ces agents actifs peuvent être par exemple des insecticides (par exemple antimites) ou des parfums.

### Etat de la technique

Autrefois, on combattait les mites dans les placards à l'aide de boules ou comprimés comportant de la naphthaline. La naphthaline a ensuite été remplacée par du paradichlorobenzène. Ce produit est maintenant à son tour suspendu à une interdiction règlementaire. Le consommateur est habitué à ces produits qui se présentent sous la forme d'une boule ou d'un comprimé de couleur blanche, lesquels sont placés dans une armoire ou un placard, le cas échéant dans la poche d'un vêtement et destinés à y séjourner pour une période prolongée. Un produit de remplacement devrait donc avoir une forme, un aspect et des caractéristiques d'utilisation similaires : la substance susceptible de tuer ou pour le moins de faire fuir les insectes nuisibles visés doit être capable de diffuser à une dose suffisante pendant une période prolongée (typiquement de l'ordre de quelques semaines).

On connaît d'autres méthodes pour assurer la diffusion prolongée de substances biocides par un matériau porteur. La demande de brevet EP 0 548 940 A1 décrit des compositions stables formées à partir de matériaux de type argile contenant des agents d'intercalation, tels que des composés organiques avec une fonction acide associés à des ions ammonium. Ainsi, ces matériaux d'intercalation peuvent stabiliser des agents actifs tels que des pesticides dans une structure lamellaire ; les agents actifs stabilisés peuvent être diffusés sur une longue durée. Ces produits peuvent trouver une utilisation dans les domaines de l'agriculture et de la santé.
La demande de brevet EP 0 636 315 A1 décrit des composés d'intercalation de type hydrotalcite avec un anion organique qui contribuent à retenir tout pesticide, parfum
ou autre agent actif, quelle que soit la nature chimique de ces agent actifs. Afin d'obtenir une intercalation homogène de cet agent, il doit être introduit à l'aide d'un solvant.

L'inclusion d'agents actifs de la famille des pyréthroïdes, mélangés à des parfums, dans des solides poreux a été décrite dans le document de brevet RU 2146870 C1. La demande de brevet WO 2005/070203 (Johnson) décrit des supports à base de céramiques, sable, sciures ou cellulose, sur lesquels est déposé l'agent qui se trouve dans une solution d'alkyl- ou aryl-polysiloxanes.

La demande de brevet EP 0 671 123 A1 décrit des formulations d'insecticides appliquées sur un support solide formé par un bloc copolymère; cela permet leur usage prolongé avec des dispositifs de vaporisation chauffants.

On connaît aussi des compositions qui peuvent être utilisées simplement par évaporation, sans chauffer. Le brevet US 4,130,450 (Whitcomb) décrit un tissu chargé d'insecticides, qui sont appliqués directement ou sous forme encapsulée. Le brevet US 4,796,381 (Kauth) décrit des bandes de papier ou de tissu imprégnés d'insecticides, tel que vaporthrine, perméthrine et bioalléthrine. La demande de brevet WO 96/32843 (Emmrich) et la demande de brevet DE 19947 146 (Bayer) décrivent d'autres supports, essentiellement à base de cellulose, qui ont été imprégnés d'un agent actif visant à tuer ou faire fuir des insectes, qui se dégage par simple évaporation. La demande de brevet GB 2 407 770 A décrit une approche similaire avec des agents actifs de type pyréthroïde pour combattre les moustiques et les mites.
D'une manière générale, l'imprégnation seule ne semble pas permettre le contrôle d'une libération par évaporation de l'agent actif sur une durée prolongée ; cela est probablement dû au fait que l'agent actif ne se trouve pas emprisonné ou n'est pas retenu par des forces physiques ou chimiques permettant de contrôler sa libération.

La libération contrôlée sur une durée prolongée est possible avec certains types de matrices à base de polymères. De telles résines ont été décrites dans les documents de brevet JP 60 161 908, JP 01 211 505, JP 01 230 504, JP 03 200 704, JP 02 196 704, JP 05 279 202 et JP 08 039 511. Ce dernier document décrit un système multi-couches en copolymères à base d'EVA permettant une libération retardée d'agents actifs. D'autres complexes multi-couches en copolymères à base d'EVA ont été décrits dans JP 06 256 103, et le document JP 209 8889 décrit l'utilisation de résines thermoplastiques étirées en polyéthylène. La majorité de ces matériaux se présentent sous forme de feuilles et ne sont pas biodégradables.

La demande de brevet EP 1 190 725 A2 (Givaudan SA) décrit une poudre destinée à absorber de l'humidité, notamment pour litière pour chat et couches de bébé, ledit produit étant constitué par un mélange d'un vecteur comportant une fragrance et d'une poudre capable d'absorber de l'humidité. La fragrance est libérée suite à l'humidification du support, sur une durée courte qui correspond à la finalité du produit.

Dans l'état de la technique pratiquement aucun exemple n'est signalé dans lesquels on a utilisé des boules ou des comprimés, car le contrôle de la libération de l'agent actif à partir d'un comprimé ou d'une boule est rendu encore plus difficile.

Le problème que la présente invention cherche à résoudre est de développer un nouveau produit pouvant être utilisé sous la forme de comprimés ou de boules, de préférence de couleur blanche, qui permet la libération lente d'agents actifs, tels que des insecticides, à température ambiante. Compte tenu de leur coût, ces agents actifs devraient pouvoir être utilisés en faible quantité. Ce produit devrait pouvoir faire intervenir de manière préférée des matériaux biodégradables ou au moins biocompatibles, et de préférence des matériaux d'origine biologique ou biotechnologique, et son procédé de fabrication ne devrait pas faire intervenir de solvant volatile.

### Objet de l'invention

Un premier objet de la présente invention est un produit composite apte à diffuser au moins un agent actif, ledit produit étant **caractérisé en ce qu**'il comprend :
a) au moins une matrice non hygroscopique et compressible à base d'au moins un sel, ledit vecteur étant solide à la température ambiante, et ledit vecteur maintenant ledit agent actif en solution solide ;
b) au moins un vecteur hydrophobe et non miscible avec la matrice, contenant au moins un agent actif ;
c) éventuellement des adjuvants ou d'autres agents actifs, se trouvant dans la matrice et/ou dans le vecteur.

L'agent actif peut être notamment un biocide, un insecticide, un anesthésiant, un répulsif, un parfum, un désodorisant, un désinfectant.

Un second objet de la présente invention est un procédé de fabrication d'une pièce en produit composite dans lequel
(a) on dissout au moins un agent actif, qui peut être solide ou liquide, dans une phase hydrophobe liquide, de préférence en dissolvant l'agent actif dans une huile paraffinique à l'état liquide ou en l'ajoutant directement à la phase hydrophobe liquide, pour former une solution liquide, qui peut éventuellement être solidifiée pour former une solution solide ;
(b) on prépare un produit intermédiaire P en mélangeant le produit issu de l'étape (a) avec la matrice,
(c) on forme par compression du produit intermédiaire P un comprimé de forme voulue.

Un troisième objet de la présente invention est l'utilisation du produit composite pour diffuser un agent actif dans une phase gazeuse ou liquide, notamment par évaporation à température ambiante ou par fumigation à une température supérieure à 25°C.

### Description de l'invention

Tous les pourcentages indiqués à titre de composition chimique sont des pourcentages massiques. On entend ici par un produit « compressible » un produit à l'état solide dont la densité augmente lorsque l'on exerce une pression extérieure sur ledit produit. On entend ici par « produit composite » un produit comportant au moins deux phases solides non miscibles.

Selon l'invention, le problème est résolu par la combinaison de plusieurs moyens.
Le produit composite apte à diffuser au moins un agent actif selon l'invention comprend au moins une matrice non hygroscopique et compressible à base d'au moins un sel. On peut utiliser un mélange de plusieurs sels. Les sels peuvent être hydratés ou non hydratés. Le sel, ou s'il y a plusieurs sels, le mélange de sels, ne doit pas être hygroscopique. Il peut être organique ou inorganique. Le pH défini en solution aqueuse se situe avantageusement entre 5 et 9, et encore plus préférentiellement aux alentours de 7.
Les sels organiques hydratés peuvent être des sels synthétiques ou naturels. Il peut s'agir de produits biotechnologiques, de préférence issus d'un procédé de fermentation, tels que les carbohydrates, le lait, les céréales. Ces produits d'origine biotechnologique sont en général biodégradables. On peut utiliser par exemple : les lactates de calcium pentahydratés (mélange D,L ou, de préférence, la forme L) (5HLACA) (n° CAS [5743-47-5]), le L-glutamate de calcium tétra-hydraté (4HGLUCA) (n° CAS [142-47-2]), le disodium glycérophosphate pentahydraté (5HGLYNA) (n° CAS [819-83-0]), le L(+) tartrate de sodium dihydraté (n° CAS[6106-24-7]), le levulinate de calcium dihydraté.

Parmi les sels inorganiques hydratés, on peut citer : le tétraborate de sodium décahydraté (10HBNA) (borax, n° CAS [1303-96-4]), le phosphate de sodium dodécahydraté (12HPHONA) (n° CAS [10039-32-4]), le pyrophosphate de sodium décahydraté (10HPYNA) (n° CAS [13472-36-1]), le sulfanilate de sodium hydraté (HSUNA) (n° CAS [123333-70-0]), le sulfate de magnésium heptahydraté (sel d'Epson (n° CAS [10034-99-8])).

On peut également utiliser des sels non hydratés, à condition qu'ils ne soient pas solubles dans le vecteur hydrophobe. A titre d'exemple, on peut utiliser les sels de calcium, sodium ou potassium de l'acide gluconique (parmi ces trois de préférence le gluconate de sodium (GANA), (n° CAS [527-07-1]). L'utilisation d'une matrice à base de gluconate conduit à une émission d'agent actif caractérisée par une première phase d'émission forte (de l'ordre de quelques jours), suivie d'une deuxième phase d'émission modérée plus longue. Cela peut permettre une utilisation de longue durée. Pour réguler l'évaporation de l'eau de la matrice, on peut aussi utiliser pour la constitution de la matrice un mélange de sels hydratés, ou un mélange de sels non hydratés ou encore un mélange de sels hydratés et de sels non hydratés. Dans un mode de réalisation avantageux, on choisit les sels ou mélanges de sels de manière à obtenir une pression de vapeur d'eau saturante qui est supérieure ou égale à 12 mm Hg, qui est la valeur moyenne de la tension de vapeur d'eau à une humidité relative de 70%. A titre d'exemple, dans ces conditions, le lactate de calcium pentahydraté a une pression de vapeur saturante de 25 mm Hg et est donc un agent émetteur d'eau (efflorescent), alors que l'acétate de magnésium tétra-hydraté avec une pression de vapeur saturante de 11 mm Hg est un agent faiblement absorbeur (déliquescent).

Toutes ces matrices, notamment lorsqu'elles se présentent sous forme de poudre, peuvent être agrégées par compression, typiquement sous une pression de quelques dizaines de kg/cm².
Parmi toutes les matrices utilisables, on peut utiliser le D,L-lactate de calcium pentahydraté racémique, mais on préfère le L-lactate de calcium pentahydraté qui est un sel neutre non hygroscopique et totalement biodégradable. Le L-lactate de calcium pentahydraté est notamment fabriqué industriellement par fermentation directe de farine de céréales et de carbohydrates à l'aide de ferments de type *Rhizopus* ou de lactobacilles: Le racémique est moins rapidement biodégradable. Les lactates de calcium sont utilisés habituellement en tant qu'additifs dans la fabrication d'aliments pour le bétail ; leur innocuité toxicologique et éco-toxicologique est amplement documentée et reconnue (d'après : Chemos 1998, Sept 37(7) pp. 1317-33 ; Auteurs Bowmer C.T. ; Hooftman R.N. Hanstveit A.O. Wenderbosch P.W., Van der Hoeven. N.). Les lactates de calcium pentahydratés sont particulièrement adaptés car ils sont faciles à compresser et se prêtent particulièrement bien à une production industrielle de comprimés.

Par ailleurs, le produit composite apte à diffuser au moins un agent actif selon l'invention comprend au moins un vecteur hydrophobe et non miscible avec la matrice, contenant au moins un agent actif. Le vecteur doit être solide à la température ambiante, car autrement le produit composite ne peut pas être formé par compression. Avantageusement, cet agent actif est soluble dans le vecteur. Pour dissoudre des pyréthroïdes ou des parfums, on peut utiliser des cires solides ou liquides, naturelles
ou synthétiques, telles que la cire d'abeille, la cire de carnauba, la cire d'ozokérite, la cire de candelilla, ou encore des paraffines linéaires ou ramifiées, liquides ou solides,
ou un mélange de ces substances, à condition toutefois que le mélange hydrophobe contenant le vecteur soit finalement solide à température ambiante. On peut aussi utiliser d'autres substances hydrophobes aptes à recevoir en tant que solvant solide des agents actifs que l'on souhaite incorporer dans le produit composite. On peut aussi faire appel à tout composé ou mélange de composés hydrophobe(s), solvant(s) des agents actifs et solide(s) à température ambiante, tel que par exemple une coupe paraffinique ou un mélange de composés terpéniques ou siloxaniques. A titre d'exemple, on peut utiliser des polysiloxanes, du polyéthylène et des copolymères dérivés de l'éthylène et d'autres oléfines (tels que butène et octène) avec une masse moléculaire telle que l'on peut obtenir un solide à la température ambiante et jusqu'à éventuellement une température de 100°C, et à condition que ce solide soit compressible et ne soit pas miscible avec la matrice.

Typiquement, ce vecteur hydrophobe maintient l'agent actif en solution solide pendant toute la durée d'utilisation du produit composite, et évite sa diffusion dans la matrice, même lorsque le vecteur devient liquide, par exemple à une température supérieure à 50°C. On entend ici par « solution solide » une répartition homogène des molécules de l'agent actif dans le vecteur hydrophobe solide. Selon l'invention, une telle solution solide peut être obtenue en mélangeant ledit agent actif avec ledit vecteur à l'état liquide pour former une solution liquide, suivi d'un refroidissement du mélange liquide.

Une autre caractéristique du vecteur est qu'il est capable, à l'état compressé, de libérer progressivement l'agent actif, même en présence de la matrice. Sans être lié par une explication du mécanisme physico-chimique de l'invention, les inventeurs pensent que cela est possible lorsque la solubilisation de l'agent actif est assurée par des forces de Van der Waals.

Le produit composite selon l'invention peut contenir une vaste gamme d'agents actifs. Il peut s'agir d'insecticides. Parmi les insecticides, on préfère les pyréthroïdes, tels que : transfluthrine, metomethrine, S-bioallethrine, esbiothrine, bioresmethrine, alpha-and beta-cipermethrine, deltamethrine, empenthrine, resmethrine, furethrine, prallethrine, cyphenothrine, cinerines I et II, les pyréthrums naturels issus de la culture de chrysanthème. On préfère la vaporthrine (empenthrine). On peut aussi utiliser d'autres biocides volatiles connus, tels que les dérivés de l'acide chrysanthémique ou d'autres composés connus tels que DDVP, DEET.

On peut utiliser plusieurs agents actifs, par exemple plusieurs insecticides, appartenant à la même famille ou à des familles différentes, ayant un mécanisme d'action analogue ou non. A titre d'exemple, on peut mélanger l'allethrine et la vaporthrine, ou l'extrait de pyrethrum et la vaporthrine, ou encore la téfluthrine et l'esbiothrine. On peut aussi réaliser des mélanges impliquant un synergisant tels que par exemple un pyrétroide avec le pipéronyl butoxyde (PBO).

La teneur en agent actif est typiquement comprise entre 0,01 et 10%, préférentiellement entre 0,1 et 10%, et encore plus préférentiellement entre 0,20 et 1%. Si une utilisation pour la fumigation est envisagée, la teneur en agent actif est avantageusement comprise entre 2 et 10%, et encore plus avantageusement entre 2 et 5%.

Plus précisément, lorsque l'agent actif est un biocide, sa concentration est préférentiellement comprise entre 0,1% et 1,0%, et encore plus préférentiellement entre 0,1% et 0,5%, alors que pour les désodorisants, on peut utiliser une concentration comprise entre 1,0% et 10,0%, et préférentiellement comprise entre 1,5% et 5,0%. Il peut s'agir d'un ou plusieurs biocides, et d'un ou plusieurs désodorisants, et ces concentrations sont des concentrations totales.

Le produit composite apte à diffuser au moins un agent actif selon l'invention peut encore comprendre des adjuvants ou d'autres agents actifs, se trouvant soit dans la matrice, soit dans le vecteur. Ces adjuvants ou d'autres agents actifs peuvent être par exemple des parfums, des huiles essentielles, des phéromones, des antioxydants, des émulsifiants, des colorants, des agents de texture. Ces adjuvants peuvent être introduits dans la phase hydrophobe, par dissolution dans la paraffine comme décrit ci-dessous pour les agents actifs. Ils peuvent également être introduits dans la matrice, notamment par imprégnation ou solubilisation, si l'adjuvant est un liquide, ou par mélange de poudres si l'adjuvant est un solide.

A titre d'exemple, l'emploi de phéromones est utile pour un produit composite destiné à combattre les mites alimentaires. Un autre type d'adjuvant sont les agents de texture. L'emploi d'un agent de texture permet de contrôler la libération d'eau, c'est-à-dire la déshydratation progressive du sel hydraté. Parmi ces agents de texture, on peut citer les polyglycosides naturels ou synthétiques, tels que la gomme de xanthane, de guar, de caroube, les alginates, l'alcool polyvinylique. Ces substances sont avantageusement utilisées à une concentration comprise entre 0,05 et 5%.
Par « parfums », on entend ici des substances naturelles ou synthétiques odorantes, ou des mélanges de telles substances, aptes à produire, sur une durée prolongée compatible avec la durée d'utilisation visée du produit composite, une odeur agréable. Il peut s'agir d'huiles essentielles (i.e. un liquide aromatique et volatil isolé par un processus de séparation physique à partir d'une plante odorante d'une seule espèce botanique), ou de constituants d'huiles essentielles, tels que des monoterpènes, sesquiterpènes, alcools, aldéhydes, cétones, esters, hydrocarbures. Si les parfums sont utilisés en même temps qu'un autre agent actif tel qu'un insecticide, il est avantageux de choisir des parfums dont la pression partielle est du même ordre de grandeur que celle de l'insecticide (13,8 mPa pour la vaporthrine) ; le parfum devient dans ce cas un agent de contrôle de la durée de vie de l'agent actif.
L'acétate de polyvinyle partiellement ou totalement hydrolysé peut être utilisé à titre d'adjuvant pour donner un aspect plus homogène et brillant au comprimé.

Dans un autre mode de réalisation, on introduit un indicateur de fin de vie du produit composite dans la matrice, préférentiellement dans une matrice hydratée. On choisit à cet effet avantageusement un sel d'un cation métallique qui, en fin de la déshydratation de la matrice, subit un changement de coloration consécutif à l'action de l'oxygène. A cette fin, on peut utiliser un sel ferreux, éventuellement assisté d'un agent d'exaltation de la couleur, tel que le KSCN.

Dans un autre mode de réalisation avantageux, l'indicateur de fin de vie est constitué de sulfate ferreux, de préférence pentahydraté (car de couleur blanche, mais le sel heptahydraté, de couleur légèrement verdâtre, peut aussi convenir sur le plan technique), éventuellement associé à de l'acétate de magnésium tetrahydraté et d'acide ascorbique comme agents régulateurs de la transformation du sel ferreux en sel ferrique. Cette composition convient pour des matrices hydratées ou non hydratées, sachant que l'acétate de magnésium permet d'avoir le taux d'humidité minimal nécessaire aux réactions de type oxydo-réduction conduisant au changement de coloration.
Les concentrations utilisables (exprimées en % massiques du comprimé) sont :
Sulfate ferreux pentahydraté: entre 3 et 30%, et de préférence entre 5 et 15%
Acide ascorbique : entre 1 et 10%, de préférence entre 1,5 et 6%
Acétate de magnésium tetrahydraté : entre 1 et 8%, de préférence entre 1,5 et 5%.
Une composition typique comprend : Sulfate ferreux 7,5%, acide ascorbique 3%, acétate de magnésium 3% ; elle peut être utilisée par exemple avec une matrice de lactate de calcium pentahydraté. L'efficacité biologique du comprimé n'est pas modifiée par la présence de l'indicateur de fin de vie.
Les trois constituants de cet indicateur de fin de vie sont de préférence incorporés dans le mélange constitué par le vecteur et la matrice dans l'ordre indiqué ci-dessus.
Un tel comprimé, initialement de couleur blanche, adoptera une couleur « marron » ou « rouille » en fin de durée d'utilisation recommandée.

Un des avantages du produit composite selon l'invention est sa capacité de libérer progressivement et sur une longue durée, typiquement de l'ordre de quelques semaines, l'agent actif. Cette libération dépend peu des conditions extérieures (température ambiante, humidité ambiante, ventilation), et en particulier ne dépend pas de l'absorption d'humidité par le comprimé formé à partir dudit produit composite. Les inventeurs ont observé que les sels hydratés, et en particulier le L-lactate de calcium pentahydraté, dégagent au cours de leur vieillissement de l'eau, qui se libère au moins en partie, du fait qu'une déshydratation totale ne se produit que très difficilement. Cela ne conduit pas à la désintégration du comprimé. Sans être lié par une explication scientifique du fonctionnement du produit composite selon l'invention, il semble qu'il se forme ainsi un réseau tridimensionnel cavitaire qui rend accessible à l'air une grande partie du vecteur hydrophobe qui n'est pas miscible avec la matrice. Par ailleurs, le vecteur, suite à la compression qui forme une étape essentielle du procédé de fabrication du produit composite selon l'invention, est présent sous la forme d'un film assez mince, avec un rapport surface sur volume élevé ; cela facilite l'accès de l'agent actif dissout dans le vecteur à l'air ambiant par l'intermédiaire du réseau cavitaire formé par l'évaporation de l'eau de la matrice. Les inventeurs ont également constaté par des analyses de thermogravimétrie que la température d'émission d'eau du composite augmente après compression.

Le procédé de fabrication du produit composite selon l'invention comprend les étapes suivantes :
(a) on dissout au moins un agent actif, qui peut être solide ou liquide, dans une phase hydrophobe liquide, de préférence en dissolvant l'agent actif dans une huile paraffinique à l'état liquide ou en l'ajoutant directement à la phase hydrophobe liquide, et on forme ainsi une solution liquide qui peut éventuellement être solidifiée pour former une solution solide;
(b) on prépare un produit intermédiaire P en mélangeant le produit issu de l'étape

(a) avec la matrice ;
(c) on forme par compression du produit intermédiaire P un comprimé de forme voulue.

La dissolution de l'agent actif, ou du mélange d'agents actifs, dans une huile paraffinique liquide se fait soit à la température ambiante soit à une température supérieure à la température ambiante. La paraffine choisie pour l'étape (a) devra normalement être chauffée à une température adaptée pour se présenter sous forme liquide pour recevoir l'agent actif. Typiquement, la température sera comprise entre 50 et 150°C, et de préférence entre 60 et 100°C. On évitera des températures trop élevées qui risquent de dégrader l'agent actif. Le procédé selon l'invention n'a pas besoin de faire appel à des solvants légers.

L'étape (b) peut avantageusement être effectuée selon l'un des deux modes de réalisation suivants :
Dans un premier mode de réalisation (b1), qui conduit à un produit intermédiaire P1, on mélange la solution solide ou liquide obtenue à l'étape (a) avec la matrice se présentant sous forme de poudre. Le produit intermédiaire P1 ainsi obtenu a la forme soit d'un mélange de solides poudreux ou granulaires soit d'une pâte de consistance appropriée soit d'un mélange liquide et d'un solide poudreux. Cette variante peut être effectuée avantageusement dans une extrudeuse bi-vis de type connu, avec une pression qui peut aller jusqu'à 300 kg/cm², et qui est préférentiellement comprise entre 10 et 200 kg/cm².

Dans un deuxième mode de réalisation (b2), qui conduit à un produit intermédiaire P2, on solidifie la solution liquide obtenue à l'étape (a) par trempe, on effectue ensuite un broyage pour obtenir une poudre, ladite poudre étant ensuite mélangée avec la matrice se présentant également sous la forme de poudre. Le produit intermédiaire P2 ainsi obtenu est une poudre.
Ladite trempe peut se faire avantageusement au contact avec une surface froide, par exemple une tôle refroidie à une température inférieure à 0°C. Le produit solide obtenu par cette trempe doit normalement être broyé, de préférence à froid, par exemple par cryobroyage ou par projection sur une surface refroidie à la température de solidification, de préférence à une température inférieure à 0°C, et encore plus préférentiellement à une température comprise entre -160°C et -20°C. L'avantage de cette variante (b2) est qu'elle dissocie la solidification de la solution obtenue à l'étape
(a) de la préparation du produit intermédiaire qui renferme le vecteur et la matrice dans les proportions voulues.

D'une manière générale, si on utilise un produit intermédiaire P solide, on préfère procéder par une solidification rapide du mélange vecteur - agent actif, car selon les constatations des inventeurs, la solidification rapide conduit à un produit intermédiaire P mieux cristallisé dont la mise en oeuvre avec la matrice, ainsi que la compression pour former un comprimé, se trouvent facilitées.

Le procédé selon l'invention peut faire intervenir plusieurs sels en mélange qui forment la matrice, et plusieurs vecteurs différents, miscibles entre eux ou non. L'utilisation d'une matrice formée de plusieurs sels permet de modifier les caractéristiques de flux hydrique de la matrice. L'utilisation de plusieurs vecteurs permet d'incorporer de manière séparée plusieurs agents actifs ou adjuvants, par exemple afin d'éviter leur interaction dans le vecteur ; dans ce cas, on peut aussi utiliser plusieurs lots du même vecteur dans lequel on dissout un agent actif ou adjuvant par lot, ou plusieurs vecteurs ou adjuvants compatibles entre eux par lot. On peut aussi dissoudre dans différents vecteurs un seul agent actif qui présente dans ces différents vecteurs une cinétique de libération différente.

La dernière étape du procédé selon l'invention est la compression du produit intermédiaire P1 ou P2. Cette étape est essentielle pour obtenir des pièces tridimensionnelles. A titre d'exemple, on a formé par compression d'un produit intermédiaire composé de 90% de 5HLACA et 10% de paraffine avec un point de fusion compris entre 58°C et 62°C (contenant l'agent actif vaporthrine ainsi qu'un parfum) un comprimé dont la densité d était égale à 1 sous une pression de 10 kg/cm², et égale à 1,277 sous une pression de 200 kg/cm².
Le rapport pondéral entre le vecteur et la matrice peut varier dans des limites vastes. Avantageusement, le produit composite selon l'invention comprend entre 50 et 99% de matrice et entre 1 et 50% de vecteur. On préfère utiliser entre 60 et 90% de matrice et entre 10 et 40% de vecteur, et encore plus préférentiellement entre 75 et 90% de matrice et entre 10 et 25% de vecteur. Dans un mode de réalisation typique, on fabrique des comprimés comportant entre 80% et 90% de matrice (5HLACA) et entre 10 et 20% de vecteurs hydrophobes, tel qu'un mélange de paraffine et d'huile de paraffine. Préférentiellement, les comprimés fabriqués sont des comprimés blancs. Le comprimé peut être préparé avec des formes tridimensionnelles très diverses : plaques, feuilles, bâtonnets, boules, cubes, cylindres, pyramides, ovoïdes, fils. On peut aussi préparer des objets de forme figurative. Ces comprimés peuvent être utilisés pendant plusieurs semaines à température ambiante sans modification de leurs propriétés de texture et sans désintégration. Par ailleurs, ces comprimés restent intacts et ne se désintègrent pas lorsqu'ils tombent par terre, sur une surface dure.

Le produit composite selon l'invention peut être utilisé de différentes manières. Il peut être utilisé par évaporation à la température ambiante, c'est-à-dire on laisse le produit simplement reposer à l'air. Il peut aussi être utilisé par fumigation à une température supérieure à 25°C. Une utilisation typique est l'utilisation pour combattre ou chasser les mites. Une autre utilisation similaire vise les mites alimentaires. Le produit composite selon l'invention peut aussi être utilisé dans des dispositifs diffuseurs, par exemple des dispositifs incorporant un chauffage, une ventilation, une humidification, ou une programmation du chauffage et/ou de la ventilation et/ou de l'humidification.

### Exemples

Les exemples suivants 1 à 9 illustrent la préparation du produit composite selon l'invention.

### Exemples 1 à 7 :

### 1) Préparation du vecteur :

15,86 g de la phase solide vecteur a été obtenue en liquéfiant à 85°C 10,00 g (environ 63% en poids) de boules de paraffine (point de fusion compris entre 58°C et 62°C) avec 3,16 g d'une huile minérale de paraffine (environ 20% en poids) (IGOL) ayant un volume massique de 810-875 (numéro enregistré NF T 60-101) contenant 2,70 g de vaporthrine (environ 17% en poids). On a obtenu une solution claire. Le produit a ensuite été coulé dans un récipient métallique contenant de l'azote liquide. La masse solide a ensuite été broyée et réduite en fine poudre.

### 2) Incorporation du vecteur à la matrice :

4,00 g de ce solide vecteur sous forme de poudre a ensuite été ajouté à 36,00 g de fine poudre (pureté de 98%) de 5HLACA, de la société ACROS, numéro CAS : [5743-47-5]). La composition du mélange était donc la suivante :
5HLACA: P : OP : VP 90% : 6,3% : 2,0% : 1,7%
avec les abréviations : P = Paraffine, OP = Huile de paraffine, VP = Vaporthrine.
Quatre boules blanches solides de 8,50 g ont alors été obtenues par compression entre 50 et 150 kg/cm².
D'autres exemples de produit(s) composite(s) selon l'invention ont été réalisés avec la méthode énoncée ci-dessus.
Les tableaux 1 et 2 récapitulent les compositions de ces exemples (Pf est l'abréviation de parfum).
Dans les exemples 2 à 9, du parfum a été ajouté à l'huile de paraffine en même temps que la vaporthrine.

**Tableau 1 : Compositions du produit composite selon l'invention avec du 5HLACA**

| N° exemple | Composition 5HLACA :P : OP : VP : Pf | Mise en forme |
|---|---|---|
| 1 | 90% : 6,3% : 2,0% : 1,7% : 0% | 4 boules de 8,5 g |
| 2 | 50% : 40,6% : 7,3% : 0,7% : 1,4% | 4 boules de 8 g et 8 g de résidu de poudre |
| 3 | 75% : 20,3% : 3,65% : 0,35% : 0,7% | 4 boules de 8 g et un résidu de poudre |
| 4 | 66% : 27,1% : 5,5% :0,46% : 0,94% | 4 boules de 8 g et un résidu de poudre |
| 5 | 90% : 6,5% : 1,7% : 0,90% : 0,90% | 4 boules de 8 g et un résidu de poudre |
| 6 | 90% : 7,2% : 1 ,8% :0,50% : 0,50% | 4 boules de 8 g et un résidu de poudre |
| 7 | 90% : 7,3% : 1,90% : 0,25% : 0,55% | 4 boules de 8 g et un résidu de poudre et 8 g de résidu de poudre |

### Exemples 8 et 9 :

**Tableau 2 : Compositions du produit composite selon l'invention avec du GANA**

| N° exemple | Composition GANA : P : OP : VP : Pf | Mise en forme |
|---|---|---|
| 8 | 50% : 44,78% : 4,42% : 0,3% : 0,5% | Boules blanches légèrement transparentes voisines de 9 g |
| 9 | 75% : 22,02% : 2,18% : 0,3% : 0,5% | Boules blanches marbrées voisines de 9 g |

### Exemple 10 :

Cet exemple démontre la compressibilité du produit composite selon l'invention. Des billes d'un mélange de 5HLACA (la matrice) et de paraffine (le vecteur) ont été préparées dans les proportions 5HLACA : P 90% : 10%, afin de réaliser une étude de la compressibilité. Les tableaux 3 et 4 illustrent cette étude de compressibilité.

**Tableau 3 : Dimension volumique et compression**

| Compression (kg/cm²) | Hauteur moyenne (cm) | Diamètre moyen (cm) | Section moyenne (cm) | Volume (cm³) |
|---|---|---|---|---|
| 10 | 2,45 | 2,04 | 3,27 | 8,00 |
| 50 | 2,18 | 2,05 | 3,29 | 7,17 |
| 100 | 2,04 | 2,05 | 3,30 | 6,74 |
| 150 | 1,99 | 2,06 | 3,33 | 6,62 |
| 200 | 1,88 | 2,04 | 3,28 | 6,20 |

**Tableau 4 : Densité et compression**

| Compression (kg/cm²) | Volume (cm³) | Poids moyen (g) | Densité |
|---|---|---|---|
| 10 | 8,00 | 8,00 | 1,000 |
| 50 | 7,17 | 7,94 | 1,106 |
| 100 | 6,74 | 8,01 | 1,188 |
| 150 | 6,62 | 8,06 | 1,217 |
| 200 | 6,20 | 7,92 | 1,277 |

### Exemple 11:

Cet exemple est une comparaison de l'émission de matière volatile en fonction de la matrice du produit composite, c'est-à-dire entre le GANA et le 5HLACA :

Les analyses ont été réalisées par thermogravimétrie (ATG) à 30°C sous balayage d'hélium (100mL/min).
- (A) : produit composite selon l'invention de composition: GANA :P:OP:VP 50% : 31,5%: 10% : 8,5% ;
- (B) : produit composite selon l'invention de composition:
5HLACA : P : OP : VP 50% : 31,5% : 10% : 8,5% ;

**Tableau 5 : Emission de matière volatile en fonction de la matrice**

| Temps (heures) | % Emission (A) | % Emission (B) |
|---|---|---|
| 10 | 0,21 | 2,24 |
| 25 | 0,33 | 3,47 |
| 50 | 0,60 | 4,80 |
| 60 | 0,69 | 5,22 |

L'émission du produit composite (A) dont la matrice est du GANA est essentiellement de la vaporthrine, alors que dans le produit composite (B) dont la matrice est du 5HLACA, de l'eau est aussi émise.

### Exemple 12 :

Cet exemple est une comparaison de l'émission de matière volatile selon qu'il s'agit de parfum ou de vaporthrine.
Les analyses ont été réalisées par ATG à 30°C sous balayage d'hélium (100mL/min).
- (C) : produit composite selon l'invention de composition: 5HLACA :P:OP:VP 50% : 31,5% : 10% : 8,5% ;
- (D) : produit composite selon l'invention de composition: 5HLACA :P:OP:Pf 6496 50%: 31,5% :10% : 8,5% ;
- (E) : produit composite selon l'invention de composition: 5HLACA :P:OP:Pf 1264 50% : 31,5% : 10% : 8,5%.

Les références des parfums (6496 et 1264) sont issues de la nomenclature Robertet.

**Tableau 6 : Emission de la matière volatile**

| Temps (heures) | % Emission de (C) | % Emission de (D) | % Emission de (E) |
|---|---|---|---|
| 10 | 2,16 | 4,93 | 5,41 |
| 25 | 3,47 | 7,96 | 8,83 |
| 50 | 4,80 | 11,65 | 12,23 |
| 60 | 5,22 | 12,85 | 13,11 |

### Exemple 13:

Cet exemple est une comparaison de l'émission de matière volatile en fonction de la température :
Les analyses ont été réalisées par ATG à 25, 30, 35 et 40°C sous balayage d'hélium (100mL/min) avec un échantillon de produit composite selon l'invention dont la composition était la suivante :

5HLACA : P : OP : VP 50% : 31,5% : 10% : 8,5%.

**Tableau 7 : Emission de la matière volatile**

| Temps (heures) | % Emission à 25°C | % Emission à 30°C | % Emission à 35°C | % Emission à 40°C |
|---|---|---|---|---|
| 10 | 1,89 | 2,19 | 2,28 | 2,42 |
| 25 | 3,02 | 3,47 | 3,56 | 3,79 |
| 50 | 4,20 | 4,80 | 4,86 | 5,23 |

### Exemple 14 :

Cet exemple est une comparaison de l'émission de matière volatile en fonction du support :

Les mesures suivantes ont été effectuées par thermogravimétrie (ATG) isotherme à 30°C sous balayage d'hélium (100mL/min).
- (F) : produit composite selon l'invention de composition : 5HLACA : P : OP : VP : Pf 50%: 31,5% : 10% : 8,5% ;
- (G) : Papier de cellulose (abrégé ci-après : C) imprégné d'un mélange huile de paraffine/vaporthrine de composition : C : OP : VP : Pf 80,8 : 9,6 : 9,6.
- (H) : Papier de cellulose imprégné de vaporthrine de composition centésimale : C : VP 92% : 8% ;
- (I) : Vaporthrine pure ;
- (K) : Papier cellulosique seul

**Tableau 8 : Emission de la matière volatile en fonction du support**

| Temps (heures) | % Emission de (F) | % Emission de (G) | % Emission de (H) | % Emission de (I) | % Emission de (K) | % Emission (H)-(I) |
|---|---|---|---|---|---|---|
| 10 | 2,35 | 4,55 | 5,7 | 1,71 | 4,13 | 3,99 |
| 25 | 3,40 | 6,26 | 9,38 | 4,54 | 4,47 | 4,84 |
| 45 | 4,45 | 8,29 | 13,06 | 8,29 | 4,37 | 4,77 |
| 60 | 5,22 | 9,36 | 15,65 | NM | 4,35 | - |

| | | | | | | |
|---|---|---|---|---|---|---|
| NM : non mesuré | | | | | | |

On constate qu'il n'y a pratiquement pas d'effet du support cellulosique, en comparant les pourcentages d'émission du papier de cellulose imprégné de vaporthrine (H) et de la vaporthrine pure (I). En effet, on constate toujours quasiment le même écart entre les pourcentages d'émission de (H) et (I) ; donc un parallélisme entre l'évolution de l'émission de la vaporthrine pure et celle imprégnée sur de la cellulose.
On note une perte spontanée due à l'émission d'eau par ATG isotherme du fait du balayage d'hélium sur le papier seul (valeurs de l'émission de (K)).

### Exemple 15:

Cet exemple est une analyse thermogravimétrique dynamique du produit composite selon l'invention, avec une élévation de température de 10°C/min et avec un débit d'hélium de 100mL/min.
Il s'agissait de mesurer l'effet dû à la matrice et à la compression, par comparaison entre un échantillon comprenant seulement de la vaporthrine et un échantillon comprenant un mélange de composition 5HLACA : VP 50% : 50%.
On a constaté une déperdition de poids pour des températures comprises entre 80°C et 150°C, suivie d'une perte de masse régulière. Cet exemple illustre la capacité de fumigation du produit composite selon l'invention.

Les exemples suivants illustrent le vieillissement des boules de produit composite selon l'invention.

### Exemple 16 :

Cet exemple montre le vieillissement de poudre dont la matrice est du GANA. Un mélange selon la méthode décrite dans les exemples 1 à 9 a été réalisé. Il comprenait :
- 40,00 g de paraffine,
- 4,00 g d'huile de paraffine,
- 4,01 g de vaporthrine,
- 2,03 g de parfum.

Après mise en poudre par dissolution à chaud et cryo-broyage, 48,5 g de ce mélange a été isolé pour être mélangé avec 48,5 g de GANA (pureté de 98%).
La composition de la poudre à vieillir était donc la suivante : GANA : P : OP : VP : Pf 48,53% : 41,2% : 4,1% : 4,14% : 2,03%. La teneur en matière volatile était comprise entre 6 et 7% (en tenant compte d'une quantité maximum d'eau de l'ordre de 0,1% à 0,2% dans le GANA).
Le vieillissement du produit composite a été suivi sur 10 essais de masse moyenne de 3,00 g (soit 185,1 mg de matière volatile) pendant 37 jours.

Le tableau 9 présente les mesures de matière volatile émise réalisées au cours de ces 37 jours (soit 888 heures au total). Le tableau 9 mentionne les masses de matière volatile émise pendant les temps indiqués sur chaque ligne du tableau.

**Tableau 9 : Emission de la matière volatile en fonction du temps**

| Temps (heures) | Emission (vaporthrine, parfum) [mg] | Emission [µg/heure] | Emission [µg/heure/g] | % Emission |
|---|---|---|---|---|
| 48 (2 jours) | 5,52 | 115 | 38,00 | 2,97 |
| 216 (9 jours suivants) | 3,90 | 18 | 6,00 | 2,17 |
| 312 (13 jours suivants) | 5,30 | 17 | 5,66 | 3,01 |
| 312 (13 jours suivants) | 6,62 | 21 | 7,00 | 3,88 |
| 216 (9 jours suivants) | 4,5 | 20,8 | 6,94 | 2,43 |

Sur 888 heures, la perte totale de poids est de 21,34 mg sur une masse de matière volatile de 185,1 mg. Cela représente donc une émission de 11,5% de la matière volatile qui se compose de vaporthrine et de parfum.
De plus, on constate une émission de matière volatile importante au cours des 48 premières heures du vieillissement. Ensuite, l'émission est régulière et voisine de 7 µg/heure/ g de matière inclue.

### Exemple 17:

Exemple de vieillissement de poudre dont la matrice est du 5HLACA.

Un mélange selon la méthode décrite dans les exemples 1 à 9 a été réalisé. Il comprenait :
- 6,17 g de paraffine,
- 0,83 g d'huile de paraffine,
- 2,00 g de vaporthrine,
- 1,01 g de parfum.

Ce qui représentait un mélange de 10,01 g.

Le mélange fluide a été obtenu par chauffage à 90°C, puis la mise en poudre a été réalisée par cryo-broyage.
La poudre ainsi obtenue a été mélangée avec 90 g de 5HLACA (pureté de 98%) en poudre contenant 22% d'eau.

La composition du produit composite à vieillir était donc la suivante :
5HLACA : P : OP : VP : Pf 90% : 6,17% : 0,83% : 2% : 1%, soit 22,8% de matière volatile.
Douze boules (environ de 8g chacune) ont été préparées et mises à l'étuve non ventilée à 40°C. Ce qui représentait une quantité théorique de matière éliminable de 1,83 g par boule.
Le tableau 10 récapitule les résultats des pesées sur chaque boule prélevée.

**Tableau 10 : Emission de la matière volatile en fonction du temps**

| Temps [heures] | Emission (vaporthrine, eau, parfum) [mg] | Emission [µg/heure] | Emission [µg/heure/g] | % Emission |
|---|---|---|---|---|
| 24 | 145 | 6042 | 755 | 7,9 |
| 48 | 186 | 3875 | 484 | 10,2 |
| 79 | 238 | 3013 | 377 | 13,0 |
| 151 | 420 | 2781 | 348 | 23,0 |
| 241 | 830 | 3444 | 430 | 45,4 |
| 415 | 863 | 2080 | 260 | 47,2 |
| 583 | 1206 | 2068 | 258 | 65,9 |
| 751 | 1280 | 1704 | 213 | 69,9 |
| 1063 | 1363 | 1282 | 160 | 74,5 |
| 1375 | 1399 | 1018 | 127 | 76,5 |

Après 57,2 jours de maintien à 40°C (soit 1375 heures), la quantité de matière volatile émise est de 1,3994 g soit 76% de la matière volatile contenue dans le produit composite selon l'invention (eau, vaporthrine, parfum).

### Exemple 18 :

Cet exemple présente les résultats de l'analyse chromatographique capillaire en phase gazeuse (CGC) réalisée sur les boules de l'exemple 17, qui ont été mises en poudre et extraites au mélange éther de pétrole/chlorure de méthylène 50 : 50. Il s'agissait de mesurer l'émission de matières volatiles, excluant l'eau, c'est-à-dire seulement les substances actives (vaporthrine et parfum). Le dosage a été effectué par rapport à l'huile de paraffine.

Le tableau 11 présente les résultats de pourcentages de vaporthine et de parfum émis en fonction du temps.

**Tableau 11 : Emission de vaporthrine et de parfum**

| Temps [jours] | % Emission Vaporthine | % Emission parfum |
|---|---|---|
| 0 | 0 | 0 |
| 2 | 20,8 | 39,8 |
| 3,4 | 17,9 | 41,7 |
| 6,4 | 29,9 | 59,2 |
| 10 | 37,7 | 82,5 |
| 17,4 | 34,1 | 69,9 |
| 24,5 | 50,6 | 92,2 |
| 31,3 | 55,5 | 94,2 |
| 44,5 | 72,1 | 94,2 |
| 57,2 | 78,2 | 95 |

Après 1375 heures (57,2 jours), 78,2% de la vaporthrine a été évaporée.

Après 25 jours, on constate que la moitié de la quantité de vaporthrine a été émise. Le temps de demi-émission est donc de 600 heures.

### Exemple 19 :

Cet exemple montre l'efficacité insecticide des comprimés selon l'invention.
Pour la détermination de l'activité biologique du produit composite selon l'invention, on utilise un protocole d'évaluation de l'efficacité biocide :
Les essais de toxicité sont réalisés dans des enceintes en carton d'un volume de 53 litres (45,5 cm x 33,5 cm x 35 cm), fermées (mais pas de façon hermétique), placées dans une pièce à température ambiante.
Une mouche (ordre des Diptères), *Ceratitis capitata* Wied, est utilisée comme réactif biologique pour évaluer l'efficacité des dispositifs.
Les insectes sont placés dans des cages d'environ 9 litres de volume (20 cm x 20 cm x 23 cm) grillagées sur quatre faces ; ils ont de la nourriture ad libitum.
Les produits composites à tester sont mis en place dans l'enceinte dix heures avant les insectes. La mortalité est contrôlée deux fois par jour. Sont considérés comme morts les insectes ne présentant plus aucun mouvement. Il est à noter que les symptômes d'une atteinte sévère du système nerveux sont visibles bien avant l'immobilité complète. De tels insectes ne survivront pas. La procédure utilisée ici sous-estime donc l'effet réel des produits testés.
Le sexe de chaque insecte mort est déterminé.
La mortalité dans une enceinte témoin (sans le produit à tester) est suivie en parallèle. Six variables, trois pour les mâles et trois pour les femelles, sont prises en compte pour évaluer l'efficacité des produits :
1) La durée d'exposition nécessaire pour entraîner la mort du premier insecte d'un sexe donné, désignée par « EI mâles » et « EI femelles » ;
2) La durée d'exposition nécessaire pour entraîner la mort de 50% des insectes d'un sexe donnée, désignée par « TL 50 mâles » et « TL 50 femelles » ;
3) La durée d'exposition nécessaire pour entraîner la mort du dernier insecte d'un sexe donné, désignée par « ET mâles » et « ET femelles » ;
Les pourcentages de mortalité sont corrigés, si nécessaire, en prenant en compte la mortalité des témoins.
Le tableau 12 montre des résultats obtenus sur des produits composites neufs (une douzaine), qui n'ont pas encore été maintenus à l'atmosphère ambiante.
Les compositions de ces composites sont indiquées dans les cinq premières colonnes du tableau, avec les abréviation suivantes :
P : paraffine; OP : huile de paraffine ; 5HLACA : L-lactate de calcium pentahydraté; VP : vaporthrine; Pf : parfum.
A la dernière ligne du tableau, ont été indiqués les résultats obtenus avec le paradichlorobenzène.

**Tableau 12**

| | Composition du composite | | | | | | | |
|---|---|---|---|---|---|---|---|---|
| N° | P | OP | 5HLACA | VP | Pf | EI | TL50 | ET |
| | [%] | [%] | [%] | [%] | [%] | (m/f) | (m/f) | (m/f) |
| 1 | 5,6 | 2,8 | 90 | 1,6 | 0 | 14/24 | 15/22 | 38/38 |
| 2 | 6,6 | 1,64 | 90 | 0,88 | 0,88 | 8/8 | 14/14 | 24/62 |
| 3 | 7,24 | 1,8 | 90 | 0,48 | 0,48 | 14/14 | 11/40 | 86/110 |
| 4 | 7,4 | 1,85 | 90 | 0,25 | 0,5 | 14/14 | 12/15 | 38/38 |
| 5 | 20,43 | 3,5 | 75 | 0,37 | 0,7 | 24/10 | 30/33 | 96/120 |
| 6 | 27,74 | 4,86 | 66 | 0,47 | 0,93 | 10/48 | 29/24 | 48/96 |
| 7 | 22,02 | 2,18 | 75 | 0,3 | 0,5 | 24/24 | 40/45 | 58/82 |
| 8 GANA | 22,02 | 2,18 | 75 | 0,3 | 0,5 | 24/24 | 23/37 | 48/48 |
| 9 | 44,78 | 4,42 | 50 | 0,3 | 0,5 | 34/34 | 43/47 | 96/72 |
| 10 GANA | 44,78 | 4,42 | 50 | 0,3 | 0,5 | 34/48 | 39/58 | 72/144 |
| 11 PVA | 17,30 | 1,90 | 79+1 PVA | 0,3 | 0,5 | 24/34 | 30/39 | 48/72 |
| 12 PVA | 17,30 | 1,90 | 77+3 PVA | 0,3 | 0,5 | 10/34 | 38/41 | 72/58 |
| Paradichloro-benzène | - | - | - | - | - | 48/96 | 87/129 | 288/264 |

Pour les composites n° 8 et 10, du gluconate de sodium (GANA) a remplacé le 5HLACA.
De plus, PVA indique l'ajout d'alcool polyvinylique à la dose indiquée.
Certains insectes développent une résistance particulière de façon aléatoire et peuvent contribuer à modifier la cohérence des résultats.
Le tableau 13 montre des résultats obtenus sur des produits composites qui ont été maintenus pendant un nombre de jours indiqué avant d'être introduits dans les enceintes.

**Tableau 13**

| | Composition du composite | | | | | | | | |
|---|---|---|---|---|---|---|---|---|---|
| N° | P [%] | OP [%] | 5HLACA [%] | VP [%] | Pf [%] | EI (m/f) | TL50 (m/f) | ET (m/f) | Nombre x de jours |
| 9 | 44,78 | 4,42 | 50 | 0,30 | 0,50 | 14/24 | 18/31 | 38/38 | 8 |
| 10 GANA | 44,78 | 4,42 | 50 | 0,3 | 0,5 | 24/24 | 24/53 | 72/86 | 8. |
| 11 PVA | 17,30 | 1,90 | 79+1 PVA | 0,3 | 0,5 | 24/34 | 28/40 | 72/72 | 11 |
| 12 PVA | 17,30 | 1,90 | 77+3 PVA | 0,3 | 0,5 | 24/34 | 37/45 | 72/58 | 11 |
| 10 GANA | 44,77 | 4,42 | 50 | 0,3 | 0,5 | 24/24 | 32/53 | 58/96 | 15 |
| 4 | 7,4 | 1,85 | 90 | 0,25 | 0,50 | 10/24 | 12/15 | 48/58 | 43 |
| 3 | 7,24 | 1,80 | 90 | 0,48 | 0,48 | 10/24 | 11/40 | 34/48 | 43 |

Les numéros de la première colonne du tableau 13 se réfèrent aux numéros de la première colonne du tableau 12.

### Exemple 20 :

Cet exemple montre l'efficacité longue durée d'un comprimé (0,3% de vaporthrine 15% de vecteur paraffinique, 85% de lactate de calcium pentahydraté) selon l'invention.
On a déterminé les valeurs TL50 et TL10 pour des mouches males et femelles, selon la méthode indiquée dans l'exemple 19, avec huit comprimés d'environ 3,5 g chacun, à l'introduction des comprimés, à 8 jours et à 181 jours. Les résultats sont résumés dans le tableau 14.

**Tableau 14**

| Durée (jours) | 0 (à l'introduction) | 8 jours | 181 jours |
|---|---|---|---|
| TL50 en heures (mâles) | 28 | 40 | 70 |
| TL50 en heures (femelles) | 45 | 58 | 105 |
| TL10 (mâles) | 15 | 25 | 55 |
| TL 10 (femelles) | 25 | 42 | 85 |

Une composition similaire, mais avec une teneur en vaporthrine de 0,2%, a été essayée à raison de six comprimés (Tableau 15) et quatre comprimés (Tableau 16).

**Tableau 15**

| Durée (jours) | 0 (à l'introduction) | 175 jours |
|---|---|---|
| TL50 en heures (mâles) | 35 | 43 |
| TL50 en heures (femelles) | 63 | 57 |
| TL10 (mâles) | 25 | 35 |
| TL 10 (femelles) | 48 | 47 |

**Tableau 16**

| Durée (jours) | 0 (à l'introduction) | 175 jours |
|---|---|---|
| TL50 en heures (mâles) | 50 | 66 |
| TL50 en heures (femelles) | 64 | 109 |
| TL10 (mâles) | 30 | 49 |
| TL 10 (femelles) | 51 | 75 |

Ces résultats montrent que les valeurs de TL50 et TL10 diminuent avec le vieillissement du comprimé en situation d'utilisation, mais ces valeurs, après environ six mois, restent encore à un niveau d'efficacité satisfaisant.

### Exemple 21 :

On a effectué une analyse thermogravimétrique de plusieurs matrices ou produits selon l'invention pour mettre en évidence l'influence de la compression sur la capacité d'émission de volatiles.
(1) On a constaté que le lactate de calcium pentahydraté en poudre présente un pic d'émission à une température 77,40 °C ; ce pic correspond au départ d'eau. Le même produit, mais sous forme comprimé, présente un pic d'émission à une température de 83,75°C.
(2) On a constaté qu'un mélange en poudre constitué de lactate de calcium pentahydraté et de paraffine contenant parfum et insecticide émet un pic d'émission de 93,27°C ; ce pic correspond au départ d'eau. Le même produit, mais sous forme comprimé, présente un pic d'émission à une température de 118,67°C.

## Revendications

1. Produit composite apte à diffuser au moins un agent actif,
**caractérisé en ce qu'**il comprend :
a) au moins une matrice non hygroscopique et compressible à base d'au moins un sel ;
b) au moins un vecteur hydrophobe et non miscible avec la matrice, contenant au moins un agent actif, ledit vecteur étant solide à la température ambiante, et ledit vecteur maintenant ledit agent actif en solution solide ;
c) éventuellement des adjuvants ou d'autres agents actifs, se trouvant dans la matrice et / ou dans le vecteur.

2. Produit selon la revendication 1, **caractérisé en ce que** ladite matrice est un sel hydraté, et de préférence sélectionné dans le groupe constitué par le lactate de calcium pentahydraté, le L-glutamate de calcium tétrahydraté, le disodium glycérophosphate pentahydraté, le L(+) tartrate de sodium dihydraté, le levulinate de calcium dihydraté, le tétraborate de sodium décahydraté, le phosphate de sodium dodécahydraté, le pyrophosphate de sodium décahydraté, le sulfanilate de sodium hydraté, le sulfate de magnésium heptahydraté.

3. Produit selon la revendication 1, **caractérisé en ce que** ladite matrice est un sel non hydraté, et de préférence sélectionné dans le groupe constitué par les sels de sodium, potassium ou calcium de l'acide gluconique et très préférentiellement le gluconate de sodium.

4. Produit selon l'une quelconque des revendications 1 à 3, **caractérisé en ce que** ladite matrice est un mélange de sels hydratés ou un mélange de sels non hydratés ou un mélange de sels hydratés et de sels non hydratés.

5. Produit selon l'une quelconque des revendications 1 à 4, **caractérisé en ce que** ledit vecteur est sélectionné dans le groupe constitué par une paraffine, une cire naturelle ou une cire synthétique.

6. Produit selon l'une quelconque des revendications 1 à 5, **caractérisé en ce que** ledit au moins un agent actif est sélectionné dans le groupe constitué par les biocides, les insecticides, les anesthésiants, les répulsifs, les parfums, les désodorisants, les désinfectants.

7. Produit selon l'une quelconque des revendications 1 à 6, **caractérisé en ce que** la concentration de l'agent actif est comprise entre 0,01% et 10%, et préférentiellement entre 0,20% et 1 %.

8. Produit selon l'une quelconque des revendications 1 à 7, **caractérisé en ce que** l'agent actif comprend un ou plusieurs biocides en une concentration totale comprise entre 0,1% et 1,0%, et préférentiellement comprise entre 0,1% et 0,5%.

9. Produit selon l'une quelconque des revendications 1 à 8, **caractérisé en ce qu'**il comprend
(i) entre 75% et 90% de ladite matrice hydrophobe, et
(ii) entre 10% à 25% dudit vecteur avec ledit au moins un agent actif.

10. Produit selon l'une quelconque des revendications 1 à 9, **caractérisé en ce que** la matrice est un produit biotechnologique, et de préférence un produit de fermentation.

11. Produit selon l'une quelconque des revendications 1 à 10, **caractérisé en ce qu'**il se présente sous la forme d'un comprimé, et de préférence sous la forme d'un comprimé blanc.

12. Produit selon l'une quelconque des revendications 1 à 8 ou 10 ou 11, **caractérisé en ce qu'**il comprend en plus un indicateur de fin de vie, qui, de préférence comprend (en pourcents massiques dudit produit )
(i) Sulfate ferreux pentahydraté: entre 3 et 30%, et de préférence entre 5 et 15%
(ii) Acide ascorbique : entre 1 et 10%, de préférence entre 1,5 et 6%
(iii) Acétate de magnésium tetrahydraté : entre 1 et 8%, de préférence entre 1,5 et 5%.

13. Procédé de fabrication du produit composite selon une quelconque des revendications 1 à 12, dans lequel
(a) on dissout au moins un agent actif dans une phase hydrophobe liquide pour former une solution liquide qui peut éventuellement être solidifiée pour former une solution solide;
(b) on prépare un produit intermédiaire P en mélangeant le produit issu de l'étape
(a) avec la matrice,
(c) on forme par compression du produit intermédiaire P un comprimé de forme voulue.

14. Procédé selon la revendication 13, **caractérisé en ce qu'**à l'étape (b), on mélange la solution liquide ou solide obtenue à l'étape (a) avec la matrice se présentant sous forme de poudre, pour obtenir ledit produit intermédiaire P.

15. Procédé selon la revendication 13, **caractérisé en ce qu'**à l'étape (b) :
(i) on solidifie la solution obtenue à l'étape (a) par trempe,
(ii) on effectue un broyage du produit issu de la trempe pour obtenir une poudre,
(iii) on mélange ladite poudre avec la matrice se présentant également sous la forme de poudre, pour obtenir ledit produit intermédiaire P.

16. Utilisation du produit composite selon l'une quelconque des revendications 1 à 12 pour diffuser un agent actif dans une phase gazeuse ou liquide.

17. Utilisation selon la revendication 16, **caractérisé en ce que** la diffusion de l'agent actif se fait par évaporation à température ambiante, ou par fumigation à une température supérieure à 25°C.

## Claims

1. Composite product capable of diffusing at least one active agent,
**characterised in that** it includes:
a) at least one non-hygroscopic and compressible matrix containing at least one salt;
b) at least one hydrophobic vector non-miscible with the matrix, containing at least one active agent, said vector being solid at ambient temperature, and said vector maintaining said active agent in solid solution;
c) optionally, additives or other active agents in the matrix and/or in the vector.

2. Product of claim 1, **characterised in that** said matrix is a hydrated salt, and preferably selected from the group consisting of calcium lactate pentahydrate, calcium L-glutamate tetrahydrate, glycerophosphate disodium pentahydrate, sodium L-(+)-tartrate dihydrate, calcium levulinate dihydrate, sodium tetraborate decahydrate, sodium phosphate dodecahydrate, sodium pyrophosphate decahydrate, sodium sulfanilate hydrate and magnesium sulphate heptahydrate.

3. Product of claim 1, **characterised in that** said matrix is a non-hydrated salt, and is preferably selected from the group consisting of sodium, potassium or calcium salts of gluconic acid, and very preferably sodium gluconate.

4. Product as claimed in any of claims 1 to 3,
**characterised in that** said matrix is a mixture of hydrated salts or a mixture of non-hydrated salts or a mixture of hydrated salts and non-hydrated salts.

5. Product as claimed in any of claims 1 to 4,
**characterised in that** said vector is selected from the group consisting of a paraffin wax, a natural wax or a synthetic wax.

6. Product as claimed in any of claims 1 to 5,
**characterised in that** said at least one active agent is selected from the group consisting of biocides, insecticides, anaesthetics, repellents, fragrances, deodorisers and disinfectants.

7. Product as claimed in any of claims 1 to 6,
**characterised in that** the concentration of the active agent is between 0.01% and 10%, and preferably between 0.20% and 1%.

8. Product as claimed in any of claims 1 to 7,
**characterised in that** the active agent includes one or more biocides in a total concentration of between 0.1% and 1.0%, and preferably between 0,1% and 0.5%.

9. Product as claimed in any of claims 1 to 8,
**characterised in that** it includes
(i) between 75% and 90% of said hydrophobic matrix, and
(ii) between 10% to 25% of said vector with said at least one active agent.

10. Product as claimed in any of claims 1 to 9,
**characterised in that** the matrix is a biotechnological product, and preferably a fermentation product.

11. Product as claimed in any of claims 1 to 10,
**characterised in that** it is in the form of a tablet, and preferably in the form of a white tablet.

12. Product as claimed in any of claims 1 to 8 or 10 or 11, **characterised in that** it further includes an end-of-life indicator, which preferably includes (in weight percents of said product)
(i) ferrous sulphate pentahydrate: between 3 and 30%, and preferably between 5 and 15%;
(ii) ascorbic acid: between 1 and 10%, and preferably between 1.5 and 6%;
(iii) magnesium acetate tetrahydrate: between 1 and 8%, and preferably between 1.5 and 5%.

13. Process for manufacturing the composite product as claimed in any of claims 1 to 12, in which
(a) at least one active agent is dissolved in a liquid hydrophobic phase in order to form a liquid solution which can optionally be solidified to form a solid solution,
(b) an intermediate product P is prepared by mixing the product derived from step (a) with the matrix,
(c) a tablet of the desired shape is formed by compressing the intermediate product P.

14. Process of claim 13, **characterised in that**, in step (b), the liquid or solid solution obtained in step (a) is mixed with the matrix in powder form, in order to obtain said intermediate product P.

15. Process of claim 13, **characterised in that**, in step (b) :
(i) the solution obtained in step (a) is solidified by quenching,
(ii) the product resulting from the quenching operation is ground in order to obtain a powder,
(iii) said powder is mixed with the matrix, which is likewise in powder form, in order to obtain said intermediate product P.

16. Use of the composite product as claimed in any of claims 1 to 12 for diffusing an active agent in a liquid or gaseous phase.

17. Use of claim 16, **characterised in that** the active agent is diffused by evaporation at ambient temperature, or by fumigation at a temperature greater than 25°C.

## Patentansprüche

1. Verbundprodukt, geeignet zur Diffusion wenigstens eines Wirkstoffes,
**dadurch gekennzeichnet, dass** es umfasst:
a) wenigstens eine nicht hygroskopische und kompressible Matrix auf der Basis von wenigstens einem Salz;
b) wenigstens einen hydrophoben und mit der Matrix nicht mischbaren Vektor, der wenigstens einen Wirkstoff enthält, wobei der Vektor bei Raumtemperatur fest ist und wobei der Vektor den Wirkstoff in fester Lösung hält;
c) eventuell Zusatzstoffe oder weitere Wirkstoffe, die sich in der Matrix und/oder in dem Vektor befinden.

2. Produkt nach Anspruch 1, **dadurch gekennzeichnet, dass** es sich bei der Matrix um ein hydratisiertes Salz handelt, bevorzugt ausgewählt aus der Gruppe bestehend aus Calciumlactat-Pentahydrat, Calcium-L-Glutamat-Tetrahydrat, Dinatriumglycerophosphat-Pentahydrat, L(+)Natriumtartrat-Dihydrat, Calciumlevulinat-Dihydrat, Natriumtetraborat-Decahydrat, Natriumphospat-Dodecahydrat, Natriumpyrophosphat-Decahydrat, Natriumsulfanilat-Hydrat, Magnesiumsulfat-Heptahydrat.

3. Produkt nach Anspruch 1, **dadurch gekennzeichnet, dass** es sich bei der Matrix um ein nicht hydratisiertes Salz handelt, bevorzugt ausgewählt aus der Gruppe bestehend aus Natrium-, Kalium- oder Calciumsalzen der Gluconsäure und besonders bevorzugt Natriumgluconat.

4. Produkt nach irgendeinem der Ansprüche 1 bis 3, **dadurch gekennzeichnet, dass** es sich bei der Matrix um ein Gemisch aus hydratisierten Salzen oder ein Gemisch aus nicht hydratisierten Salzen oder ein Gemisch aus hydratisierten Salzen und nicht hydratisierten Salzen handelt.

5. Produkt nach irgendeinem der Ansprüche 1 bis 4, **dadurch gekennzeichnet, dass** der Vektor ausgewählt ist aus der Gruppe bestehend aus Paraffin, natürlichem Wachs oder synthetischem Wachs.

6. Produkt nach irgendeinem der Ansprüche 1 bis 5, **dadurch gekennzeichnet, dass** der wenigstens eine Wirkstoff ausgewählt ist aus der Gruppe bestehend aus Bioziden, Insektiziden, Narkosemitteln, Abwehrmitteln, Parfums, Desodorants, Desinfektionsmitteln.

7. Produkt nach irgendeinem der Ansprüche 1 bis 6, **dadurch gekennzeichnet, dass** die Konzentration des Wirkstoffs zwischen 0,01 % und 10 % und vorzugsweise zwischen 0,20 % und 1 % liegt.

8. Produkt nach irgendeinem der Ansprüche 1 bis 7, **dadurch gekennzeichnet, dass** der Wirkstoff ein oder mehrere Biozide in einer Gesamtkonzentration von 0,1 % bis 1,0 % und vorzugsweise von 0,1 % bis 0,5 % enthält.

9. Produkt nach irgendeinem der Ansprüche 1 bis 8, **dadurch gekennzeichnet, dass** es enthält
(i) zwischen 75 % und 90 % der hydrophoben Matrix und
(ii) zwischen 10 % und 25 % des Vektors mit dem wenigstens einen Wirkstoff.

10. Produkt nach irgendeinem der Ansprüche 1 bis 9, **dadurch gekennzeichnet, dass** es sich bei der Matrix um ein biotechnologisches Erzeugnis und vorzugsweise um ein Gärungserzeugnis handelt.

11. Produkt nach irgendeinem der Ansprüche 1 bis 10, **dadurch gekennzeichnet, dass** es in Form einer Tablette und bevorzugt in Form einer weißen Tablette vorliegt.

12. Produkt nach irgendeinem der Ansprüche 1 bis 8 oder 10 oder 11,
**dadurch gekennzeichnet, dass** es zudem eine Anzeige Lebensdauer-Ende aufweist, vorzugsweise bestehend aus (in Masseprozent des Produktes)
(i) Eisen(II)-Sulfat-Pentahydrat: zwischen 3 und 30 % und vorzugsweise zwischen 5 und 15 %
(ii) Ascorbinsäure: zwischen 1 und 10 %, vorzugsweise zwischen 1,5 und 6%
(iii)Magnesiumacetat-Tetrahydrat: zwischen 1 und 8 %, vorzugsweise zwischen 1,5 und 5 %.

13. Verfahren zur Herstellung des Verbundproduktes nach irgendeinem der Ansprüche 1 bis 12, bei dem
(a) wenigstens ein Wirkstoff in einer flüssigen hydrophoben Phase gelöst wird, um eine flüssige Lösung zu bilden, welche eventuell verfestigt werden kann, um eine feste Lösung zu bilden;
(b) ein Zwischenprodukt P hergestellt wird, indem das Produkt aus Schritt
(a) mit der Matrix gemischt wird;
(c) durch Komprimieren des Zwischenproduktes P eine Tablette gewünschter Form gebildet wird.

14. Verfahren nach Anspruch 13, **dadurch gekennzeichnet, dass** in Schritt (b) die in Schritt (a) gewonnene flüssige oder feste Lösung mit der in Pulverform vorliegenden Matrix gemischt wird, um das Zwischenprodukt P zu erhalten.

15. Verfahren nach Anspruch 13, **dadurch gekennzeichnet, dass** in Schritt (b)
(i) die in Schritt (a) gewonnene Lösung durch Abschrecken verfestigt wird,
(ii) das aus dem Abschreckvorgang hervorgegangene Produkt gemahlen wird, um ein Pulver zu erhalten,
(iii) das Pulver mit der ebenfalls in Pulverform vorliegenden Matrix gemischt wird, um das Zwischenprodukt P zu erhalten.

16. Verwendung des Verbundproduktes nach irgendeinem der Ansprüche 1 bis 12 zur Diffusion eines Wirkstoffes in einer Gas- oder Flüssigphase.

17. Verwendung nach Anspruch 16, **dadurch gekennzeichnet, dass** die Diffusion des Wirkstoffes durch Verdampfen bei Raumtemperatur oder durch Verräuchern bei einer Temperatur oberhalb 25° C erfolgt.
